# EUROPEAN PATENT SPECIFICATION

(11) **EP 2 740 666 B1**
(45) Date of publication and mention of the grant of the patent: **22.03.2017**
(21) Application number: 12196003.3
(22) Date of filing: 07.12.2012
(51) Int. Cl.: B64D 13/08, B01D 53/18, B01D 53/14, B64D 37/32, B64D 13/06

(54) **System and method for processing recirculation air**
System und Verfahren zur Aufbereitung von Umluft
Système et procédé de traitement de l'air en recirculation

(43) Date of publication of application: 11.06.2014
(73) Proprietor: Airbus Operations GmbH, 21129 Hamburg (DE)
(72) Inventor: Klimpel, Frank, 21129 Hamburg (DE)
(74) Representative: Schicker, Silvia

(56) References cited:
- EP-A1- 1 721 653
- EP-A2- 1 273 515
- WO-A1-2012/102124
- US-A- 5 516 330
- US-A- 5 791 982
- US-A- 6 093 238

## Description

The present invention relates to a system and a method for processing recirculation air discharged from an aircraft cabin.

The cabin of a modern passenger aircraft typically is air-conditioned by means of an air conditioning system, as described for example in DE 10 2008 053 320 A1 and US 2010/101251 A1 or DE 10 2010 054 448 A1 and WO 2012/079756 A2. The air conditioning system typically comprises an air conditioning unit which is supplied with compressed process air that is generated by a compressor or bled off from an engine or an auxiliary power unit (APU) of the aircraft. In the air conditioning unit, the process air, upon flowing through at least one heat exchanger as well as through various compression and expansion units, is cooled and expanded. Cooled process air exiting the air conditioning unit finally is supplied to a mixing chamber where it is mixed with recirculation air recirculated from an aircraft region to be air conditioned. The mixed air from the mixing chamber, via respective mixed air lines, is supplied to the aircraft region to be air conditioned.

During operation of the aircraft, the CO₂ content of the air in the aircraft cabin and hence also in the recirculation air discharged from the aircraft cabin increases due to the breathing air consumption of the passengers in the aircraft cabin. To prevent the CO₂ content of the air in the aircraft cabin exceeding a statutory threshold value of 0.5% the recirculation air discharged from the aircraft cabin, in the mixing chamber of the air conditioning system, may be mixed with a suitable amount of cooled process air supplied to the mixing chamber from the air conditioning unit. Further, as described in DE 43 35 152 C1 or US 5,516,330, the recirculation air discharged from the aircraft cabin, before being supplied to the mixing chamber of the air conditioning system, may be directed through a CO₂ absorber. The CO₂ absorber according to DE 43 35 152 C1 or US 5,516,330 comprises a CO₂ filter, in particular a solid amine filter.

In EP 1 721 653 A1, the closest prior art, a carbon dioxide adsorption element is described which rapidly adsorbs a large amount of carbon dioxide, and regenerates amine groups for carbon dioxide adsorption rapidly and uniformly with high-temperature air. The carbon dioxide adsorption element for adsorbing carbon dioxide in air comprises a foil-like or plate-like support member, a porous aluminum oxide film covering the support member, and the amine groups clinging to the inner surface of each pore of the film for carbon dioxide adsorption. The film is formed by oxidation of aluminum or aluminum alloy. The depth direction of each pore of the film is the thickness direction of the support member.

The invention is directed at the object of specifying a system and a method for processing recirculation air discharged from an aircraft cabin which allow the provision of high quality recirculation air.

This object is achieved by a system for processing recirculation air discharged from an aircraft cabin having the features of claim 1 and a method for processing recirculation air discharged from an aircraft cabin having the features of claim 9.

A system for processing recirculation air discharged from an aircraft cabin comprises a recirculation air supply line which is connectable to the aircraft cabin so as to allow a flow of recirculation air discharged from the aircraft cabin therethrough. The flow of recirculation air from the aircraft cabin into the recirculation air supply line may be controlled by at least one suitable valve. The recirculation air flowing through the recirculation air supply line may have a CO₂ content of up to approximately 0.5%. Further, the recirculation air may contain approximately 20.1% O₂.

The system for processing recirculation air further comprises an absorber which is connected to the recirculation or supply line and which is adapted to remove CO₂ from the recirculation air flowing through the recirculation air supply line by absorption of CO₂ in an absorption medium. A recirculation air discharge line is connected to the absorber and is connectable to the aircraft cabin so as to allow a flow of absorption treated recirculation air exiting the absorber to the aircraft cabin. Preferably, the absorption treated recirculation air exiting the absorber has a CO₂ content of approximately 0.04%. Further, the absorption treated recirculation air at the exit of the absorber may contain approximately 20.1% O₂. The recirculation air discharge line may directly open into the aircraft cabin. Preferably, however, the recirculation air discharge line opens into a mixing chamber wherein the recirculation air may, for example, be mixed with process air provided to the mixing chamber from an air conditioning unit.

Finally, an air processing device is disposed in the recirculation air discharge line. The air processing device is connected to an oxygen source and is adapted to enrich the recirculation air exiting the absorber with O₂. For example, the O₂ source may be adapted to supply a gas stream having an O₂ content of up to approximately 35% to the air processing device. In the air processing device, the O₂ content of the recirculation air exiting the absorber may be increased from approximately 16% to approximately 21%. As a result, the recirculation air flowing through the recirculation air discharge line downstream of air processing device may contain approximately 21% O₂ and approximately 0.04% CO₂.

The system for processing recirculation air provides high quality recirculation air. In particular, the system allows to very effective and efficiently reduce the CO₂ content of the recirculation air discharged from the aircraft cabin. Further, the recirculation air treated by the system for processing recirculation air has an O₂ content which is comparable to the O₂ content of fresh ambient air. As a result, a supply of fresh ambient air to the recirculation air so as to increase the O₂ content of the recirculation air can be omitted or at least significantly reduced. Further, the amount of fresh process air provided, for example, by an air conditioning unit and mixed with the recirculation air, for example in a mixing chamber, can be reduced.

The O₂ source connected to the air processing device preferably is a fuel tank inerting system. A typical fuel tank inerting system is supplied with ambient air. In the fuel tank inerting system, the O₂-content of the ambient air is reduced, wherein O₂ occurs as a waste product which in prior art inerting systems is discharged to the ambient atmosphere. In the system for processing recirculation air, the O₂ occuring as a waste product in the fuel tank inerting system is used to increase the O₂ content of the recirculation air which further increases the efficiency of the system for processing recirculation air.

The absorber is adapted to remove CO₂ from the recirculation air flowing through the recirculation air supply line by absorption of CO₂ in a liquid absorption medium. The absorber thus acts as a gas scrubbing device, i.e. a device wherein a CO₂ containing recirculation air flow is introduced in the liquid absorption medium so as to remove the CO₂ from the recirculation air flow. In general, the liquid absorption medium may be any liquid absorption medium which is suitable to remove CO₂ from an air stream, either by physical absorption or by chemical absorption. Parameters which may be observed upon selecting the liquid absorption medium may for example be the toxicity, the effectiveness and the odour of the liquid absorption medium as well as the desired purity of the recirculation air. Preferably, however, the liquid absorption medium is a liquid absorption medium which allows a chemical absorption of CO₂. Liquid absorption media which allow a chemical absorption of CO₂ are in particular suitable to effectively remove CO₂ from a gas stream containing CO₂ at a low partial pressure. For example, water, GenosorbN^{®} (Polymethyldiglycolamine) or a mixture of GenosorbN^{®} and water may be used as the liquid absorption medium in the absorber of the system for processing recirculation air.

The absorber, for example, may be designed in the form of an absorber tube allowing a flow of recirculation air to be treated therethrough, wherein nozzles for spraying the liquid absorption medium into the recirculation air flow may be provided, for example, in the region of a wall of the absorber tube. A tube-shaped absorber requires only a small installation space and thus is in particular suitable for use on board an aircraft. It is, however, also conceivable to integrate the absorber into a mixing chamber for mixing recirculation air with, for example, process air provided from an air conditioning unit. The considerable height of construction of the mixing chamber allows the integration of an absorber having a large passage length allowing a very effective and very efficient operation of the absorber.

Preferably, the system for processing recirculation air discharged from an aircraft cabin further comprises an absorption medium discharge line having a first end connected to the absorber. A second end of the absorption medium discharge line may be connected to a desorber. The absorption medium discharge line thus allows a flow of CO₂ loaded liquid absorption medium from the absorber to the desorber. The CO₂ loaded absorption medium may, for example, be a sodiumcarbonate solution. Further, an absorption medium supply line may be present which has a first end connected to the desorber and a second end connected to the absorber. The absorption medium supply line thus allows a flow of regenerated liquid absorption medium from the desorber to the absorber.

The desorber may be connectable to the ambient atmosphere and may be adapted to operate under a reduced ambient pressure prevailing in an unpressurized region of an aircraft during flight operation of the aircraft. In other words, when the system for processing recirculation air discharged from an aircraft cabin is installed in an aircraft, the desorber may be connected to the ambient atmosphere so as to expose the desorber to the ambient pressure, in particular the reduced ambient pressure which prevails outside of the aircraft as well as in an unpressurized region of the aircraft during flight operation of the aircraft, for example when the aircraft is flying at cruising altitude. For example, the desorber may be adapted to operate under a pressure of approximately 0.2 bar.

For example, the desorber, may be installed in an unpressurized region of the aircraft. It is, however, also conceivable to install the desorber within a pressurized region of the aircraft, but to connect the desorber, for example, via a suitable fluid line, to the ambient atmosphere outside of the aircraft or the unpressurized region of the aircraft. The low pressure prevailing in the desorber during flight operation of the aircraft allows a high desorption rate to be achieved. Heating of the CO₂ loaded absorption medium in the desorber or heating of the CO₂ loaded absorption medium prior to supplying the CO₂ loaded absorption medium to the desorber or evacuating the desorber, for example by means of a suitable pump, thus can be omitted. Hence, a particularly efficient operation of the system for processing recirculation air can be achieved or at least significantly reduced.

A discharge conveying device may be disposed in the absorption medium discharge line for conveying CO₂ loaded absorption medium from the absorber to the desorber. The discharge conveying device may, for example, be designed in the form of a pump. Further, a pre-heater may be disposed in the absorption medium discharge line. For example, the pre-heater may be disposed in the absorption medium discharge line downstream of the discharge conveying device. The pre-heater serves to pre-heat the CO₂ loaded absorption medium prior to being supplied to the desorber. Pre-heating of the CO₂ loaded absorption medium enhances the desorption efficiency of the desorber and is particularly advantageous when the desorber is operated during ground operation of the aircraft, i.e. when the desorber has to be operated under normal ambient pressure.

A supply conveying device may be disposed in the absorption medium supply line. Like the discharge conveying device, the supply conveying device also may be designed in the form of a pump. Further, a cooler may be disposed in the absorption medium supply line, for example downstream of the supply conveying device. The cooler serves to cool the regenerated absorption medium flowing through the absorption medium supply line prior to be supplied back to the absorber. Finally, it is conceivable to thermally couple the absorption medium discharge line to the absorption medium supply line so as to transfer heat from the regenerated absorption medium flowing through the absorption medium supply line to the CO₂ loaded medium flowing through the absorption medium discharge line. The thermal coupling between the absorption medium discharge line and the absorption medium supply line, for example, may be achieved by means of a heat exchanger.

Preferably, the desorber is connectable to a ram air channel so as to allow a flow of ram air through the desorber and to thus purge CO₂ desorbed from the absorption medium from the desorber. Further, the desorber may be connected to the fuel tank inerting system so as to allow CO₂ purged from the desorber to be supplied to the fuel tank inerting system. The fuel tank inerting system usually is supplied with ambient air and generates a gas to be supplied to a fuel tank so as to inert the fuel tank which usually contains N₂, CO₂ and noble gases and has an O₂ content which is significantly lower than the O₂ content of ambient air for rendering the gas inflammable. The supply of CO₂ which occurs as a waste product in the desorption process carried out in the desorber to the fuel tank inerting system thus increases the CO₂ content of the gas supplied to the fuel tank inerting system.

In a preferred embodiment of the system for processing recirculation air, the system further comprises a compressor which is disposed in the recirculation air supply line and which is adapted to compress the recirculation air flowing through the recirculation air supply line. When the recirculation air is compressed by means of a compressor, an additional conveying device for conveying the recirculation air through the system for processing recirculation air can be omitted. Further, the recirculation air is supplied to the absorber at an elevated pressure allowing a high absorption efficiency of the absorber to be achieved. Specifically, the compressor may be operated, for example, under the control of a suitable control unit, such that the recirculation air flowing through the recirculation air supply line, prior to being supplied to the absorber, is compressed to a pressure suitable for optimizing the CO₂ absorption in the absorber.

Further, a turbine may be disposed in the recirculation air discharge line. The turbine may be adapted to expand the recirculation air flowing through the recirculation air discharge line. As discussed above, the recirculation air, by means of a compressor, may compressed to a desired elevated pressure so as to enhance the absorption efficiency in the absorber. The turbine then may serve to again reduce the pressure of the recirculation air, preferably to a pressure level at which the recirculation air is suitable to be directed to the aircraft cabin, either directly or via a mixing chamber. Preferably, the turbine is adapted to drive the compressor. As a result, the output of a motor driving the compressor may be reduced. For example, the turbine may be disposed with the compressor on a common shaft. A motor driving the compressor also may be disposed on the common shaft connecting the turbine and the compressor.

The system for processing recirculation air further may comprise a heat exchanger disposed in the recirculation air supply line and being adapted to cool the recirculation air flowing through the recirculation air supply line to a first predetermined temperature. Preferably, the heat exchanger is disposed in the recirculation air supply line downstream of the compressor. The first predetermined temperature preferably is a temperature suitable for optimizing the CO₂ absorption in the absorber.

Moreover, a further heat exchanger may be disposed in the recirculation air discharge line which is adapted to cool the recirculation air flowing through the recirculation air discharge line to a second predetermined temperature. Preferably, the further heat exchanger is disposed in the recirculation air discharge line upstream of the turbine. The second predetermined temperature preferably is a temperature suitable for allowing the recirculation air to be directed to the turbine and, therafter, to the aircraft cabin, either directly or via a mixing chamber.

A water separator may be disposed in the recirculation air discharge line. Preferably, the water separator is disposed in the recirculation air discharge line downstream of the further heat exchanger and serves to remove water condensed from the recirculation air flow upon being cooled in the further heat exchanger from the recirculation air flow. Preferably, the water separator is designed in the form of a high pressure water separator and also is suitable to remove residual liquid absorption medium which may be present in the recirculation air flowing through the recirculation air discharge line from the recirculation air flow.

In a method for processing recirculation air discharged from an aircraft cabin, a flow of recirculation air discharged from the aircraft cabin is guided through a recirculation air supply line. CO₂ is removed from the recirculation air flowing through the recirculation air supply line in an absorber by absorption of CO₂ in a liquid absorption medium. A flow of treated recirculation air exiting the absorber is guided through a recirculation air discharge line to the aircraft cabin. The recirculation air exiting the absorber is enriched with O₂ by means of an air processing device which is disposed in the recirculation air discharge line and which is connected to an O₂ source.

The O₂-source preferably is a fuel tank inerting system.

Preferably, a flow of CO₂ loaded liquid absorption medium is guided from the absorber to a desorber through an absorption medium discharge line having a first end connected to the absorber and a second end connected to the desorber. A flow of regenerated liquid absorption medium may be guided from the desorber to the absorber through an absorption medium supply line having a first end connected to the desorber and a second end connected to the absorber. The desorber may be connectable to the ambient atmosphere and may be adapted to operate under reduced ambient pressure prevailing in an unpressurized region of an aircraft during flight operation of the aircraft. In particular, operation of the desorber may be controlled, for example by means of a suitable control unit, such that the desorber preferably is operated during flight operation of the aircraft. The system and the method of processing recirculation air thus uses the pressure differences present on board an aircraft during flight operation of the aircraft for enhancing the efficiency of recirculation air processing.

The method for processing recirculation air may further comprise the step of conveying the CO₂ loaded absorption medium from the absorber through the absorption medium discharge line by means of a discharge conveying device. Further, the CO₂ loaded absorption medium flowing through the absorption medium discharge line may be pre-heated by means of a pre-heater. The regenerated absorption medium exiting the desorber may be conveyed though the absorption medium supply line by means of a supply conveying device. The regenerated absorption medium flowing through the absorption medium supply line may be cooled by means of a cooler.

In the method for processing recirculation air, a flow of ram air may be guided from a ram air channel through the desorber so as to purge CO₂ desorbed from the absorption medium from the desorber. CO₂ purged from the desorber may be supplied to a fuel tank inerting system.

The recirculation air flowing through the recirculation air supply line may be compressed by means of a compressor disposed in the recirculation air supply line. Further, the recirculation air flowing through the recirculation air discharge line may be expanded by means of a turbine disposed in the recirculation air discharge line.

The recirculation air flowing through the recirculation air supply line may be cooled to a first predetermined temperature by means of a heat exchanger disposed in the recirculation air supply line. The first predetermined temperature preferably is a temperature suitable for optimizing the CO₂ absorption in the absorber. The recirculation air flowing through the recirculation air discharge line may be cooled to a second predermined temperature by means of a second heat exchanger disposed in the recirculation air discharge line. The second predetermined temperature may be a temperature suitable for allowing the recirculation air to be directed to the turbine and, thereafter, to the aircraft cabin.

In the method for processing recirculation air, water may be separated from the recirculation air flowing through the recirculation air discharge line by means of a water separator disposed in the recirculation air discharge line. Further, residual liquid absorption medium which may be present in the recirculation air flowing through the recirculation air discharge line may be separated from the recirculation air flow in the water separator.

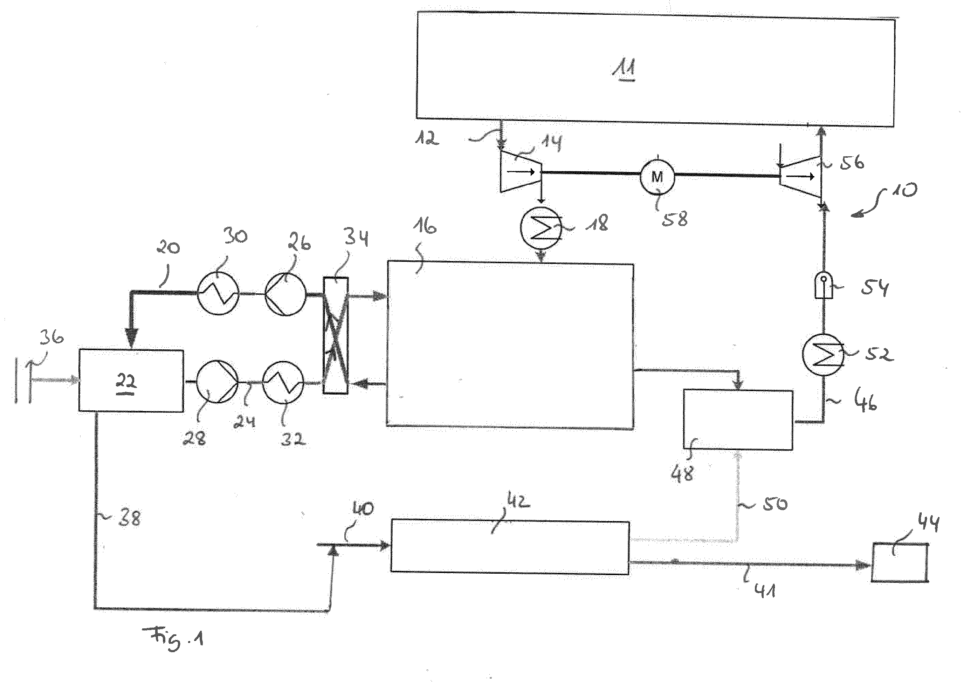

A preferred embodiment of a process and a method for processing recirculation air discharged from an aircraft cabin now is described in greater detail with reference to the appended schematic drawing, wherein
- Figure 1: shows a schematic diagram of a system for processing recirculation air discharged from an aircraft cabin.

Figure shows a system 10 for processing recirculation air discharged from an aircraft cabin 11. The system 10 comprises a recirculation air supply line 12 which is connectable to the aircraft cabin 11. The flow of recirculation air from the aircraft cabin 11 into the recirculation air supply line 12 may be controlled by a suitable valve (not shown). The recirculation air flowing through the recirculation air supply line 12 contains approximately 20.1% O₂ and approximately ≤ 0.5% CO₂.

A compressor 14 is disposed in the recirculation air supply line 12 which serves to compress the recirculation air flowing through the recirculation air supply line 12. Since the compressor 14 compresses the recirculation air flowing through the recirculation air supply line 12 to an elevated pressure, an additional conveying device for conveying the recirculation air through the system 10 can be omitted. Further, the compressor 14 compresses the recirculation air flowing through the recirculation air supply line to a pressure which is suitable for optimizing the CO₂ absorption in an absorber 16 which is connected to the recirculation air supply line 12 downstream of the compressor 14. Finally, a heat exchanger 18 is disposed in the recirculation air supply line 12. The heat exchanger 18 cools the recirculation air flowing through the recirculation air supply line 12 to a temperature which is suitable for optimizing the CO₂ absorption in the absorber 16.

The absorber 16 serves to remove CO₂ from the recirculation air, i.e. to reduce the CO₂ content of the recirculation air supplied to the absorber 16 via the recirculation air supply line 12. In the absorber 16, the recirculation air is directed through a liquid absorption medium. For example, water, a mixture of water and GenosorbN^{®} or GenosorbN^{®} may be used as the liquid absorption medium in the absorber 16. Since the recirculation air, prior to being supplied to the absorber 16, is compressed by means of the compressor 14, the absorber 16 may operate with a particularly high efficiency, i.e. a high rate of absorption.

CO₂ loaded absorption medium is discharged from the absorber 16 via an absorption medium discharge line 20. The absorption medium discharge line 20 has a first end connected to the absorber 16 and a second end connected to a desorber 22. Regenerated absorption medium exiting the desorber 22 is directed back to the absorber 16 via an absorption medium supply line 24 having a first end connected to the desorber 22 and a second end connected to the absorber 16. A discharge conveying device 26 is disposed in the absorption medium discharge line 20. The discharge conveying device 26 is designed in the form of a pump and serves to convey CO₂ loaded absorption medium exiting the absorber 16 through the absorption medium discharge line to the desorber 22. A supply conveying device 28, which also is designed in the form of a pump, is disposed in the absorption medium supply line 24 and serves to convey regenerated absorption medium exiting the desorber 22 through the absorption medium supply line 24 to the absorber 16.

The desorber 22 is operated under a reduced pressure of approximately 0.2 bar. This allows a particularly high rate of desorption to be achieved. Specifically, the desorber 22 is disposed in an unpressurized region of the aircraft and hence, during flight operation of the aircraft, is exposed to the reduced pressure prevailing in the unpressurized region of the aircraft when the aircraft is flying at high altitude. In dependence on the operating conditions, the desorber 22 may achieve a desorption efficiency of approximately 80 to 100%.

In order to improve the desorption efficiency in the desorber 22, a pre-heater 28 is disposed in the absorption medium discharge line 20 downstream of the discharge conveying device 26. The pre-heater 30 serves to pre-heat the CO₂ loaded absorption medium prior to being supplied to the desorber 22. Typically, when the aircraft is flying a cruising altitude, the low operating pressure of the desorber 22 is sufficient so to as to achieve the desired rate of desorption and desorption efficiency. When, however, the desorber 22 is operated while the aircraft is on the ground, pre-heating the CO₂ loaded absorption medium by means of the pre-heater 30 allows to still achieve the desired rate of desorption and desorption efficiency.

A cooler 32 is disposed in the absorption medium supply line 24 downstream of the supply conveying device 28. The cooler 32 serves to cool the regenerated absorption medium flowing through the absorption medium supply line 24 to a desired temperature prior to directing the regenerated absorption medium back to the absorber 16. Finally, the flow of CO₂ loaded absorption medium flowing through the absorption medium discharge line 20 and the flow of regenerated absorption medium flowing through the absorption medium supply line 24 are brought into thermal contact with each other in a heat exchanger 34. Specifically, in the heat exchanger 34, heat is transferred from the regenerated absorption medium flowing through the absorption medium supply line 24 to the CO₂ loaded absorption medium flowing through the absorption medium discharge line 20 allowing both, a further cooling of the regenerated absorption medium and a pre-heating of the CO₂ loaded absorption medium.

The desorber 22 is connected to a ram air channel 36. A flow of ram air from the ram air channel 36 to the desorber 22 may be controlled by a suitable valve (not shown). The ram air supplied to the desorber 22 from the ram air channel 36 serves to purge CO₂ desorbed from the absorption medium from the desorber 22. The CO₂, together with a ram air purge flow, is discharged from the desorber 22 via a CO₂-purge line 38. For example, the mixture of ram air and CO₂ flowing through the CO₂-purge line 38 may have a CO₂ content of approximately 3.96%.

The CO₂-purge line 38 opens into an ambient air supply line 40 which connects a fuel tank inerting system 42 to the ambient atmosphere. Ambient air is supplied to the fuel tank inerting system 42 via the ambient air supply line 40. Within the fuel tank inerting system 42, the O₂-content of the air is reduced so as to generate an inflammable gas mixture which is supplied to a fuel tank 44 via an inert gas supply line 41. The introduction of CO₂-rich gas from the CO₂-purge line 38 into the inert gas supply line 40 upstream of the fuel tank inerting system 42 increases the CO₂ content of the gas stream supplied to the fuel tank inerting system 42.

Recirculation air exiting the absorber 16 is supplied back to the aircraft cabin 11 via a recirculation air discharge line 46. An air processing device 48 is disposed in the recirculation air discharge line 46. The air processing device 48 is connected to the fuel tank inerting system 42 via an O₂-supply line 50. O₂ which is generated in the fuel tank inerting system 42 as a waste product thus is reused in the air processing device 48 so as to enrich the recirculation air exiting the absorber 16 with O₂. The gas stream directed from the fuel tank inerting system 42 to the air processing device 48 may have an O₂-content of up to approximately 35%. Thus, recirculation air exiting the absorber and containing approximately 20.1% O₂ and approximately 0.04% CO₂, after treatment in the air processing device 48, exits the air processing device 48 with a content of approximately 21% O₂ and approximately 0.04% CO₂.

Downstream of the air processing device 48, a further heat exchanger 52 is disposed in the recirculation air discharge line 46. The further heat exchanger 52 serves to cool the recirculation air flowing through the recirculation air discharge line 46 to a temperature suitable for allowing the recirculation air to be directed back to the aircraft cabin 11. Downstream of the further heat exchanger 52, a water separator 54 is disposed in the recirculation air discharge line 46. The water separator 54 is designed in the form of a high pressure water separator and serves to separate water condensed from the recirculation air flow upon cooling in the further heat exchanger 52 as well as residual liquid absorption medium from the recirculation air flow.

Finally, the recirculation air flow flowing through the recirculation air discharge line 46 is directed over a turbine 56. The turbine 56 serves to expand the recirculation air to a pressure at which the recirculation air may be directed back to the aircraft cabin 11, rather directly or via a mixing chamber. The turbine 56 and the compressor 14 are disposed on a common shaft. As a result, the compressor 14 may be driven by the turbine 56, hence allowing the output of a motor 58 for driving the compressor 14 to be operated with less output.

## Claims

1. A system (10) for processing recirculation air discharged from an aircraft cabin (11), the system (10) comprising:
- a recirculation air supply line (12) being connectable to the aircraft cabin (11) so as to allow a flow of recirculation air discharged from the aircraft cabin (11) therethrough,
and **characterized by** further comprising:
- an absorber (16) connected to the recirculation air supply line (12) and being adapted to remove CO₂ from the recirculation air flowing through the recirculation air supply line (12) by absorption of CO₂ in a liquid absorption medium,
- a recirculation air discharge line (46) connected to the absorber (16) and being connectable to the aircraft cabin (11) so as to allow a flow of absorption treated recirculation air exiting the absorber (16) to the aircraft cabin (11), and
- an air processing device (48) disposed in the recirculation air discharge line (46), being connected to an O₂-source (42) and being adapted to enrich the recirculation air exiting the absorber (16) with O₂.

2. The system according to claim 1,
wherein the O₂-source (42) is a fuel tank inerting system.

3. The system according to claim 1 or 2,
further comprising:
- an absorption medium discharge line (20) having a first end connected to the absorber (16) and a second end connected to a desorber (22) so as to allow a flow of CO₂ loaded liquid absorption medium from the absorber (16) to the desorber (22), and/or
- an absorption medium supply line (24) having a first end connected to the desorber (22) and a second end connected to the absorber (16) so as to allow a flow of regenerated liquid absorption medium from the desorber (22) to the absorber (16),
wherein the desorber (22) is connectable to the ambient atmosphere and adapted to operate under a reduced ambient pressure prevailing in an unpressurized region of an aircraft during flight operation of the aircraft.

4. The system according to claim 3,
wherein at least one of a discharge conveying device (26) and a pre-heater (30) is disposed in the absorption medium discharge line (20), and/or wherein at least one of a supply conveying device (28) and a cooler (32) is disposed in the absorption medium supply line (24), and/or wherein the absorption medium discharge line (20) is thermally coupled to the absorption medium supply line (24).

5. The system according to claim 3 or 4,
wherein the desorber (22) is connectable to a ram air channel (36) so as to allow a flow of ram air through the desorber (22) and to thus purge CO₂ desorbed from the absorption medium from the desorber (22), and/or wherein the desorber (22) is connected to a fuel tank inerting system (42) so as to allow CO₂ purged from the desorber (22) to be supplied to the fuel tank inerting system (42).

6. The system according to any one of claims 1 to 5,
further comprising:
- a compressor (14) disposed in the recirculation air supply line (12) and being adapted to compress the recirculation air flowing through the recirculation air supply line (12), and/or
- a turbine (56) disposed in the recirculation air discharge line (46) and being adapted to expand the recirculation air flowing through the recirculation air discharge line (46).

7. The system according to any one of claims 1 to 6,
further comprising:
- a heat exchanger (18) disposed in the recirculation air supply line (12) and being adapted to cool the recirculation air flowing through the recirculation air supply line (12) to a first predetermined temperature, the first predetermined temperature being a temperature suitable for optimizing the CO₂ absorption in the absorber (16), and/or
- a further heat exchanger (52) disposed in the recirculation air discharge line (46) and being adapted to cool the recirculation air flowing through the recirculation air discharge line (46) to a second predetermined temperature, the second predetermined temperature being a temperature suitable for allowing the recirculation air to be directed to the turbine (56) and, thereafter, to the aircraft cabin (11).

8. The system according to any one of claims 1 to 7,
further comprising:
- a water separator (54) disposed in the recirculation air discharge line (46).

9. A method for processing recirculation air discharged from an aircraft cabin (11), the method comprising the steps:
- guiding a flow of recirculation air discharged from the aircraft cabin (11) through a recirculation air supply line (12),
- removing CO₂ from the recirculation air flowing through the recirculation air supply line (12) in an absorber (16) by absorption of CO₂ in a liquid absorption medium,
- guiding a flow of absorption treated recirculation air exiting the absorber (16) through a recirculation air discharge line (46) to the aircraft cabin (11), and
- enriching the recirculation air exiting the absorber (16) with O₂ by means of an air processing device (48) which is disposed in the recirculation air discharge line (46) and which is connected to an O₂ source (42).

10. The method according to claim 9,
wherein the O₂ source (42) is a fuel tank inerting system.

11. The method according to claim 9 or 10,
further comprising at least one of the steps:
- guiding a flow of CO₂ loaded liquid absorption medium from the absorber (16) to a desorber (22) through an absorption medium discharge line (20) having a first end connected to the absorber (16) and a second end connected to the desorber (22),
- guiding a flow of regenerated liquid absorption medium from the desorber (22) to the absorber (16) through an absorption medium supply line (24) having a first end connected to the desorber (22) and a second end connected to the absorber (16), wherein the desorber (22) is connectable to the ambient atmosphere and adapted to operate under a reduced ambient pressure prevailing in an unpressurized region of an aircraft during flight operation of the aircraft,
- conveying the CO₂ loaded absorption medium from the absorber (16) through the absorption medium discharge line (20) by means of a discharge conveying device (26),
- pre-heating the CO₂ loaded absorption medium flowing through the absorption medium discharge line (20) by means of a pre-heater (30),
- conveying the flow of regenerated absorption medium from the desorber (22) through the absorption medium supply line (24) by means of a supply conveying device (28),
- cooling the regenerated absorption medium flowing through the absorption medium supply line (24) by means of a cooler (32), and
- transferring heat from the regenerated absorption medium flowing through the absorption medium supply line (24) to the CO₂ loaded absorption medium flowing through the absorption medium discharge line (20).

12. The method according to claim 11,
further comprising at least one of the steps:
- guiding a flow of ram air from a ram air channel (26) through the desorber (22) so as to purge CO₂ desorbed from the absorption medium from the desorber (22), and
- supplying CO₂ purged from the desorber (22) to a fuel tank inerting system (42).

13. The method according to any one of claims 9 to 12,
further comprising at least one of the steps:
- compressing the recirculation air flowing through the recirculation air supply line (12) by means of a compressor (14) disposed in the recirculation air supply line (12),
- expanding the recirculation air flowing through the recirculation air discharge line (46) by means of a turbine (56) disposed in the recirculation air discharge line (46).

14. The method according to any one of claims 9 to 13,
further comprising at least one of the steps:
- cooling the recirculation air flowing through the recirculation air supply line (12) to a first predetermined temperature by means of a heat exchanger (18) disposed in the recirculation air supply line (12), the first predetermined temperature being a temperature suitable for optimizing the CO₂ absorption in the absorber (16), and
- cooling the recirculation air flowing through the recirculation air discharge line (46) to a second predetermined temperature by means of a further heat exchanger (52) disposed in the recirculation air discharge line (46), the second predetermined temperature being a temperature suitable for allowing the recirculation air to be directed to the turbine (56) and, thereafter, to the aircraft cabin (11).

15. The method according to any one of claims 9 to 14,
further comprising the step:
- separating water from the recirculation air flowing through the recirculation air discharge line (46) by means of a water separator (54) disposed in the recirculation air discharge line (46).

## Patentansprüche

1. System (10) zur Aufbereitung von aus einer Luftfahrzeugkabine (11) abgeführter Rezirkulationsluft, das umfasst:
- eine Rezirkulationsluftzuleitung (12), die mit einer Luftfahrzeugkabine (11) verbindbar ist, um von aus der Luftfahrzeugkabine (11) abgeführter Rezirkulationsluft durchströmbar zu sein,
und **dadurch gekennzeichnet, dass** es ferner umfasst:
- einen Absorber (16), der mit der Rezirkulationsluftzuleitung (12) verbunden und dazu eingerichtet ist, durch Absorption von CO₂ in einem flüssigen Absorptionsmedium CO₂ aus der durch die Rezirkulationsluftzuleitung (12) strömenden Rezirkulationsluft zu entfernen,
- eine Rezirkulationsluftableitung (46), die mit dem Absorber (16) verbunden und mit der Luftfahrzeugkabine (11) verbindbar ist, um eine Strömung von aus dem Absorber (16) austretender, absorptionsbehandelter Rezirkulationsluft zu der Luftfahrzeugkabine (11) zu ermöglichen, und
- eine Luftaufbereitungseinrichtung (48), die in der Rezirkulationsluftableitung (46) angeordnet, mit einer O₂-Quelle (42) verbunden und dazu eingerichtet ist, die aus dem Absorber (16) austretende Rezirkulationsluft mit O₂ anzureichern.

2. System nach Anspruch 1,
wobei die O₂-Quelle (42) ein Treibstofftank-Inertisierungssystem ist.

3. System nach Anspruch 1 oder 2,
das ferner umfasst:
- eine Absorptionsmediumableitung (20), die ein mit dem Absorber (16) verbundenes erstes Ende und ein mit einem Desorber (22) verbundenes zweites Ende aufweist, um eine Strömung von mit CO₂-angereichertem, flüssigem Absorptionsmedium von dem Absorber (16) zu dem Desorber (22) zu ermöglichen, und/oder
- eine Absorptionsmediumzuleitung (24), die ein mit dem Desorber (22) verbundenes erstes Ende und ein mit dem Absorber (16) verbundenes zweites Ende aufweist, um eine Strömung von regeneriertem, flüssigem Absorptionsmedium von dem Desorber (22) zu dem Absorber (16) zu ermöglichen,
wobei der Desorber (22) mit der Umgebungsatmosphäre verbindbar und dazu eingerichtet ist, unter einem verringerten Umgebungsdruck betrieben zu werden, welcher in einem nicht bedruckten Bereich des Luftfahrzeugs während des Flugbetriebs des Luftfahrzeugs vorherrscht.

4. System nach Anspruch 3,
wobei eine Abfuhrfördereinrichtung (26) und/oder ein Vorheizer (30) in der Absorptionsmediumableitung (20) angeordnet ist/sind, und/oder wobei eine Zufuhrfördereinrichtung (28) und/oder ein Kühler (32) in der Absorptionsmediumzuleitung (24) angeordnet ist/sind, und/oder wobei die Absorptionsmediumableitung (20) thermisch mit der Absorptionsmediumzuleitung (24) gekoppelt ist.

5. System nach Anspruch 3 oder 4,
wobei der Desorber (22) mit einem Stauluftkanal (36) verbindbar ist, um eine Stauluftströmung durch den Desorber (22) zu ermöglichen und dadurch das von dem Absorptionsmedium desorbierte CO₂ aus dem Desorber (22) abzuführen, und/oder wobei der Desorber (22) mit einem Treibstofftank-Inertisierungssystem (42) verbunden ist, um die Zufuhr von aus dem Desorber (22) abgeführtem CO₂ zu dem Treibstofftank-Inertisierungssystem (42) zu ermöglichen.

6. System nach einem der Ansprüche 1 bis 5,
das ferner umfasst:
- einen Kompressor (14), der in der Rezirkulationsluftzuleitung (12) angeordnet und dazu eingerichtet ist, die durch die Rezirkulationsluftzuleitung (12) strömende Rezirkulationsluft zu verdichten, und/oder
- eine Turbine (56), die in der Rezirkulationsluftableitung (46) angeordnet und dazu eingerichtet ist, die durch die Rezirkulationsluftableitung (46) strömende Rezirkulationsluft zu expandieren.

7. System nach einem der Ansprüche 1 bis 6,
das ferner umfasst:
- einen Wärmetauscher (18), der in der Rezirkulationsluftzuleitung (12) angeordnet und dazu eingerichtet ist, die durch die Rezirkulationsluftzuleitung (12) strömende Rezirkulationsluft auf eine erste vorgegebene Temperatur zu kühlen, wobei die erste vorgegebene Temperatur eine Temperatur ist, die für eine Optimierung der CO₂-Absorption in dem Absorber (16) geeignet ist, und/oder
- einen weiteren Wärmetauscher (52), der in der Rezirkulationsluftableitung (46) angeordnet und dazu eingerichtet ist, die durch die Rezirkulationsluftableitung (40) strömende Rezirkulationsluft auf eine zweite vorgegebene Temperatur zu kühlen, wobei die zweite vorgegebene Temperatur eine Temperatur ist, die dazu geeignet ist, es zu ermöglichen, die Rezirkulationsluft zu der Turbine (56) und anschließend in die Luftfahrzeugkabine (11) zu leiten.

8. System nach einem der Ansprüche 1 bis 7,
das ferner umfasst:
- einen Wasserabscheider (54), der in der Rezirkulationsluftableitung (46) angeordnet ist.

9. Verfahren zur Aufbereitung von aus einer Luftfahrzeugkabine (11) abgeführter Rezirkulationsluft, wobei das Verfahren die Schritte umfasst:
- Leiten eines aus der Luftfahrzeugkabine (11) abgeführten Rezirkulationsluftstroms durch eine Rezirkulationsluftzuleitung (12),
- Entfernen von CO₂ aus der durch die Rezirkulationsluftzuleitung (12) strömenden Rezirkulationsluft in einem Absorber (16) durch Absorption von CO₂ in einem flüssigen Absorptionsmedium,
- Leiten eines aus dem Absorber (16) austretenden, absorptionsbehandelten Rezirkulationsluftstroms durch eine Rezirkulationsluftableitung (46) zu der Luftfahrzeugkabine (11), und
- Anreichern der aus dem Absorber (16) austretenden Rezirkulationsluft mit O₂ durch eine Luftaufbereitungseinrichtung (48), die in der Rezirkulationsluftableitung (46) angeordnet und mit einer O₂-Quelle (42) verbunden ist.

10. Verfahren nach Anspruch 9,
wobei die O₂-Quelle (42) ein Treibstofftank-Inertisierungssystem ist.

11. Verfahren nach Anspruch 9 oder 10,
das ferner mindestens einen der Schritte umfasst:
- Leiten eines Stroms aus CO₂-angereichertem, flüssigem Absorptionsmedium von dem Absorber (16) zu einem Desorber (22) durch eine Absorptionsmediumableitung (20), die ein mit dem Absorber (16) verbundenes erstes Ende und ein mit dem Desorber (22) verbundenes zweites Ende aufweist,
- Leiten eines Stroms aus regeneriertem, flüssigem Absorptionsmedium von dem Desorber (22) zu dem Absorber (16) durch eine Absorptionsmediumzuleitung (24), die ein mit dem Desorber (22) verbundenes erstes Ende und ein mit dem Absorber (16) verbundenes zweites Ende aufweist, wobei der Desorber (22) mit der Umgebungsatmosphäre verbindbar und dazu eingerichtet ist, unter einem verringerten Umgebungsdruck betrieben zu werden, welcher in einem nicht bedruckten Bereich des Luftfahrzeugs während des Flugbetriebs des Luftfahrzeugs vorherrscht,
- Fördern des Stroms aus CO₂-angereichertem, flüssigem Absorptionsmedium von dem Absorber (16) durch die Absorptionsmediumableitung (20) durch eine Abfuhrfördereinrichtung (26),
- Vorheizen des durch die Absorptionsmediumableitung (20) strömenden, CO₂-angereichterten Absorptionsmediums durch einen Vorheizer (30),
- Fördern des Stroms aus regeneriertem Absorptionsmedium von dem Desorber (22) durch die Absorptionsmediumzuleitung (24) durch eine Zufuhrfördereinrichtung (28),
- Kühlen des durch die Absorptionsmediumzuleitung (24) strömenden, regenerierten Absorptionsmediums durch einen Kühler (32), und
- Übertragen von Wärme von dem durch die Absorptionsmediumzuleitung (24) strömenden, regenerierten Absorptionsmedium auf das durch die Absorptionsmediumableitung (20) strömende, CO₂-angereicherte Absorptionsmedium.

12. Verfahren nach Anspruch 11,
das ferner mindestens einen der Schritte umfasst:
- Leiten eines Stauluftstroms aus einem Stauluftkanal (26) durch den Desorber (22), um von dem Absorptionsmedium desorbiertes CO₂ aus dem Desorber (11) abzuführen,
- Zuführen des aus dem Desorber (22) abgeführten CO₂ zu einem Treibstofftank-Inertisierungssystem (42).

13. Verfahren nach einem der Ansprüche 9 bis 12,
das ferner mindestens einen der Schritte umfasst:
- Verdichten der durch die Rezirkulationsluftzuleitung (12) strömenden Rezirkulationsluft durch einen Kompressor (14), der in der Rezirkulationsluftzuleitung (12) angeordnet ist,
- Expandieren der durch die Rezirkulationsluftableitung (46) strömenden Rezirkulationsluft durch eine Turbine (56), die der Rezirkulationsluftableitung (46) angeordnet ist.

14. Verfahren nach einem der Ansprüche 9 bis 13,
das ferner mindestens einen der Schritte umfasst:
- Kühlen der durch die Rezirkulationsluftzuleitung (12) strömenden Rezirkulationsluft auf eine erste vorgegebene Temperatur durch einen Wärmetauscher (18), der in der Rezirkulationsluftzuleitung (12) angeordnet ist, wobei die erste vorgegebene Temperatur eine für eine Optimierung der CO₂-Absorption in dem Absorber (16) geeignete Temperatur ist, und
- Kühlen der durch die Rezirkulationsluftableitung (46) strömenden Rezirkulationsluft auf eine zweite vorgegebene Temperatur durch einen weiteren Wärmetauscher (52), der in Rezirkulationsluftableitung (46) angeordnet ist, wobei die zweite vorgegebene Temperatur eine Temperatur ist, die dazu geeignet ist, zu ermöglichen, die Rezirkulationsluft zu der Turbine (56) und anschließend in die Luftfahrzeugkabine (11) zu leiten.

15. Verfahren nach einem der Ansprüche 9 bis 14,
das ferner den Schritt umfasst:
- Abscheiden von Wasser aus der durch die Rezirkulationsluftableitung (46) strömenden Rezirkulationsluft durch einen Wasserabscheider (54), der in der Rezirkulationsluftableitung (46) angeordnet ist.

## Revendications

1. Système (10) de traitement d'air de recirculation déchargé d'une cabine (11) d'aéronef, le système (10) comprenant :
- une ligne (12) d'alimentation d'air de recirculation pouvant être connectée à la cabine (11) d'aéronef de manière à permettre un écoulement d'air de recirculation déchargé de la cabine (11) d'aéronef à travers celle-ci,
et **caractérisé en ce que** comprenant en outre :
- un absorbeur (16) connecté à la ligne (12) d'alimentation d'air de recirculation et étant adapté à éliminer le CO₂ de l'air de recirculation s'écoulant à travers la ligne (12) d'alimentation d'air de recirculation par absorption de CO₂ dans un milieu liquide d'absorption,
- une ligne (46) de décharge d'air de recirculation connectée à l'absorbeur (16) et pouvant être connectée à la cabine (11) d'aéronef de manière à permettre un écoulement d'air de recirculation traité par absorption sortant de l'absorbeur (16) jusque dans la cabine (11) d'aéronef, et
- un dispositif (48) de traitement d'air disposé dans la ligne (46) de décharge d'air de recirculation étant connecté à une source d'O₂ (42) et étant adapté à enrichir l'air de recirculation sortant de l'absorbeur (16) avec de l'O₂.

2. Système selon la revendication 1,
dans lequel la source d'O₂ (42) est un système de mise en atmosphère inerte de réservoir de carburant.

3. Système selon la revendication 1 ou 2,
comprenant en outre :
- une ligne (20) de décharge de milieu d'absorption ayant une première extrémité connectée à l'absorbeur (16) et une deuxième extrémité connectée à un désorbeur (22) de manière à permettre un écoulement de milieu liquide d'absorption chargé en CO₂ de l'absorbeur (16) jusqu'au désorbeur (22), et/ou
- une ligne (24) d'alimentation de milieu d'absorption ayant une première extrémité connectée au désorbeur (22) et une deuxième extrémité connectée à l'absorbeur (16) de manière à permettre un écoulement de milieu liquide d'absorption régénéré du désorbeur (22) jusqu'à l'absorbeur (16),
dans lequel le désorbeur (22) peut être connecté à l'atmosphère ambiante et est adapté à fonctionner sous une pression ambiante réduite prévalant dans une région non pressurisée d'un aéronef lors d'une opération de vol de l'aéronef.

4. Système selon la revendication 3,
dans lequel au moins un d'un dispositif (26) de transport de décharge et d'un préchauffeur (30) est disposé dans la ligne (20) de décharge de milieu d'absorption, et/ou dans lequel au moins un d'un dispositif (28) de transport d'alimentation et d'un refroidisseur (32) est disposé dans la ligne (24) d'alimentation de milieu d'absorption, et/ou dans lequel la ligne (20) de décharge de milieu d'absorption est thermiquement couplée à la ligne (24) d'alimentation de milieu d'absorption.

5. Système selon la revendication 3 ou 4,
dans lequel le désorbeur (22) peut être connecté à un canal (36) d'air dynamique de manière à permettre un écoulement d'air dynamique à travers le désorbeur (22) et pour ainsi purger le CO₂ désorbé du milieu d'absorption du désorbeur (22), et/ou dans lequel le désorbeur (22) est connecté à un système (42) de mise en atmosphère inerte de réservoir de carburant de manière à permettre que le CO₂ purgé du désorbeur (22) soit alimenté dans le système (42) de mise en atmosphère inerte de réservoir de carburant.

6. Système selon l'une quelconque des revendications 1 à 5,
comprenant en outre :
- un compresseur (14) disposé dans la ligne (12) d'alimentation d'air de recirculation et étant adapté à comprimer l'air de recirculation s'écoulant à travers la ligne (12) d'alimentation d'air de recirculation, et/ou
- une turbine (56) disposée dans la ligne (46) de décharge d'air de recirculation et étant adaptée à détendre l'air de recirculation s'écoulant à travers la ligne (46) de décharge d'air de recirculation.

7. Système selon l'une quelconque des revendications 1 à 6,
comprenant en outre :
- un échangeur de chaleur (18) disposé dans la ligne (12) d'alimentation d'air de recirculation et étant adapté à refroidir l'air de recirculation s'écoulant à travers la ligne (12) d'alimentation d'air de recirculation jusqu'à une première température prédéterminée, la première température prédéterminée étant une température appropriée pour optimiser l'absorption de CO₂ dans l'absorbeur (16), et/ou
- un autre échangeur de chaleur (52) disposé dans la ligne (46) de décharge d'air de recirculation et étant adapté à refroidir l'air de recirculation s'écoulant à travers la ligne (46) de décharge d'air de recirculation jusqu'à une deuxième température prédéterminée, la deuxième température prédéterminée étant une température appropriée pour permettre que l'air de recirculation soit dirigé jusqu'à la turbine (56) et, ensuite, jusqu'à la cabine (11) d'aéronef.

8. Système selon l'une quelconque des revendications 1 à 7,
comprenant en outre :
- un séparateur (54) d'eau disposé dans la ligne (46) de décharge d'air de recirculation.

9. Procédé de traitement d'air de recirculation déchargé d'une cabine (11) d'aéronef, le procédé comprenant les étapes de :
- guidage d'un écoulement d'air de recirculation déchargé de la cabine (11) d'aéronef à travers une ligne (12) d'alimentation d'air de recirculation,
- élimination du CO₂ de l'air de recirculation s'écoulant à travers la ligne (12) d'alimentation d'air de recirculation dans un absorbeur (16) par absorption de CO₂ dans un milieu liquide d'absorption,
- guidage d'un écoulement d'air de recirculation traité par absorption sortant de l'absorbeur (16) à travers une ligne (46) de décharge d'air de recirculation jusque dans la cabine (11) d'aéronef, et
- enrichissement de l'air de recirculation sortant de l'absorbeur (16) avec de l'O₂ au moyen d'un dispositif (48) de traitement d'air qui est disposé dans la ligne (46) de décharge d'air de recirculation et qui est connecté à une source d'O₂ (42).

10. Procédé selon la revendication 9,
dans lequel la source d'O₂ (42) est un système de mise en atmosphère inerte de réservoir de carburant.

11. Procédé selon la revendication 9 ou 10,
comprenant en outre au moins une des étapes de :
- guidage d'un écoulement de milieu liquide d'absorption chargé en CO₂ de l'absorbeur (16) jusqu'à un désorbeur (22) à travers une ligne (20) de décharge de milieu d'absorption ayant une première extrémité connectée à l'absorbeur (16) et une deuxième extrémité connectée au désorbeur (22),
- guidage d'un écoulement de milieu liquide d'absorption régénéré du désorbeur (22) jusqu'à l'absorbeur (16) à travers une ligne (24) d'alimentation de milieu d'absorption ayant une première extrémité connectée au désorbeur (22) et une deuxième extrémité connectée à l'absorbeur (16),
dans lequel le désorbeur (22) peut être connecté à l'atmosphère ambiante et est adapté à fonctionner sous une pression ambiante réduite prévalant dans une région non pressurisée d'un aéronef lors d'une opération de vol de l'aéronef,
- transport du milieu d'absorption chargé en CO₂ depuis l'absorbeur (16) à travers la ligne (20) de décharge de milieu d'absorption au moyen d'un dispositif (26) de transport de décharge,
- préchauffage du milieu d'absorption chargé en CO₂ s'écoulant à travers la ligne (20) de décharge de milieu d'absorption au moyen d'un préchauffeur (30),
- transport de l'écoulement de milieu d'absorption régénéré depuis le désorbeur (22) à travers la ligne (24) d'alimentation de milieu d'absorption au moyen d'un dispositif (28) de transport d'alimentation,
- refroidissement du milieu d'absorption régénéré s'écoulant à travers la ligne (24) d'alimentation de milieu d'absorption au moyen d'un refroidisseur (32), et
- transfert de chaleur du milieu d'absorption régénéré s'écoulant à travers la ligne (24) d'alimentation de milieu d'absorption au milieu d'absorption chargé en CO₂ s'écoulant à travers la ligne (20) de décharge de milieu d'absorption.

12. Procédé selon la revendication 11,
comprenant en outre au moins une des étapes de :
- guidage d'un écoulement d'air dynamique d'un canal (26) d'air dynamique à travers le désorbeur (22) de manière à purger le CO₂ désorbé du milieu d'absorption du désorbeur (22), et
- alimentation du CO₂ purgé du désorbeur (22) dans un système (42) de mise en atmosphère inerte de réservoir de carburant.

13. Procédé selon l'une quelconque des revendications 9 à 12,
comprenant en outre au moins une des étapes de :
- compression de l'air de recirculation s'écoulant à travers la ligne (12) d'alimentation d'air de recirculation au moyen d'un compresseur (14) disposé dans la ligne (12) d'alimentation d'air de recirculation,
- détente de l'air de recirculation s'écoulant à travers la ligne (46) de décharge d'air de recirculation au moyen d'une turbine (56) disposée dans la ligne (46) de décharge d'air de recirculation.

14. Procédé selon l'une quelconque des revendications 9 à 13,
comprenant en outre au moins une des étapes de :
- refroidissement de l'air de recirculation s'écoulant à travers la ligne (12) d'alimentation d'air de recirculation à une première température prédéterminée au moyen d'un échangeur de chaleur (18) disposé dans la ligne (12) d'alimentation d'air de recirculation, la première température prédéterminée étant une température appropriée pour optimiser l'absorption de CO₂ dans l'absorbeur (16), et
- refroidissement de l'air de recirculation s'écoulant à travers la ligne (46) de décharge d'air de recirculation à une deuxième température prédéterminée au moyen d'un autre échangeur de chaleur (52) disposé dans la ligne (46) de décharge d'air de recirculation, la deuxième température prédéterminée étant une température appropriée pour permettre que l'air de recirculation soit dirigé jusqu'à la turbine (56) et, ensuite, jusqu'à la cabine (11) d'aéronef.

15. Procédé selon l'une quelconque des revendications 9 à 14,
comprenant en outre l'étape de :
- séparation d'eau de l'air de recirculation s'écoulant à travers la ligne (46) de décharge d'air de recirculation au moyen d'un séparateur (54) d'eau disposé dans la ligne (46) de décharge d'air de recirculation.
